(19) Europäisches Patentamt
European Patent Office
Office européen des brevets

(11) EP 0 803 780 B1

(12) **EUROPEAN PATENT SPECIFICATION**

(45) Date of publication and mention of the grant of the patent:
**19.11.2003 Bulletin 2003/47**

(51) Int Cl.[7]: **G03G 9/09**, G03G 9/097, C09B 17/00

(21) Application number: **97106584.2**

(22) Date of filing: **21.04.1997**

(54) **Charge control agent and toner for developing electrostatic images**

Ladungssteuermittel und Toner zur Entwicklung elektrostatischer Bilder

Agent de contrôle de charge et toner pour le développement d'images électrostatiques

(84) Designated Contracting States:
**CH DE FR GB LI**

(30) Priority: **23.04.1996 JP 12788696**
**29.11.1996 JP 33462596**

(43) Date of publication of application:
**29.10.1997 Bulletin 1997/44**

(73) Proprietor: **ORIENT CHEMICAL INDUSTRIES, LTD.**
**Osaka-shi, Osaka (JP)**

(72) Inventors:
- **Yasumatsu, Masashi**
  **Neyagawa-shi, Osaka (JP)**
- **Yamanaka, Shun-ichiro**
  **Neyagawa-shi, Osaka (JP)**
- **Hayashi, Akihiko**
  **Neyagawa-shi, Osaka (JP)**
- **Okada, Kazuya**
  **Neyagawa-shi, Osaka (JP)**
- **Yamamoto, Satoshi**
  **Neyagawa-shi, Osaka (JP)**

(74) Representative: **Liedl, Christine, Dipl.-Chem. et al**
**Hansmann & Vogeser**
**Patentanwälte**
**Postfach 70 08 60**
**81308 München (DE)**

(56) References cited:
**EP-A- 0 122 650**
**EP-A- 0 261 637**
**EP-A- 0 575 805**
**DE-A- 1 929 851**
**DE-A- 3 615 571**
**US-A- 4 086 054**
**US-A- 5 275 902**

- **DATABASE WPI Section Ch, Week 8829 Derwent Publications Ltd., London, GB; Class A97, AN 88-201305 XP002036666 & JP 63 137 976 A (PENTEL KK) , 9 June 1988**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 803 780 B1

## Description

The present invention relates to a toner for developing electrostatic images used to develop electrostatic latent images in electrophotography, electrostatic printing, etc., with a charge control agent used to control or stabilize the amount of charges of the toner, to enhance the chargeability of an electrostatic powder paint, or to provide a charge for sleeves, doctor blades, carriers, etc., in a copying machine or printing machine.

In copying machines and other instruments based on electrophotography, various toners containing a coloring agent, a fixing resin and other substances are used to visualize the electrostatic latent image formed on the photoreceptor having a light- sensitive layer containing a photoconductive substance. These toners are required to show satisfactory performance as to chargeability, fixability, offset resistance, durability, etc.

In recent years, to improve image quality while increasing copying and printing speeds, there has been increased demand regarding toner charge properties, such as increased rise speed, and toner fixing properties on recording paper, such as excellent low-temperature fixability and offset resistance. Such demand for improved toner performance is becoming stronger with the trend toward advanced performance of copying machines and printers.

Chargeability is a key factor in electrostatic latent image-developing systems. Thus, to appropriately control toner chargeability, a charge control agent providing a positive or negative charge is often added to the toner.

Of the conventional charge control agents in actual application, those providing a positive charge for a toner include nigrosine dyes and quaternary ammonium salt compounds. Guanidine and imidazole derivatives etc. have also been proposed as such toners.

Many of the conventional nigrosine charge control agents provide excellent positive chargeability when added to a toner. However, some problems remain to be resolved, including unsatisfactory levels of frictional charge stability, dispersibility in fixing resin and durability in multiple repeated use of toners, and relatively low clearness of initial copying images due to insufficient charge rise speeds.

DE 1929851 A discloses a toner comprising a charge control agent which is a nigrosine salt obtainable from nigrosine base and an organic acid which might be chloroacetic acid.

EP 0 261 637 A discloses a dye comprising a water insoluble nigrosine dye, induline dye or basic dye, a water miscible solvent and a hydroxycarboxylic acid having at least three hydroxy groups. The hydroxycarboxylic acid might be gluconic acid.

US 4,086,054 A describes solutions of alkylbenzenesulfonats of basic dyes in normally liquid alcohols, glycols and glycol ethers. A salt of C.I. Sovent Black 7 and alkylbenzenesulfonic acid is described.

JP 63137976 A (dervent abstract) describes a salt of C.I. Solvent Black 5 and polyethylenealkylether phosphoric or sulforic acid obtained by stirring at 40 °C.

DE 36 15 571 A discloses a charge control agent and a toner comprising the charge control agent salt containing a phenyl safranine cation and an organic anion such as alkylbenzenesulfonate or chloracetate.

The object of the present invention is to provide a toner containing a charge control agent having improved levels of charge rise and stability, environmental independence, offset resistance and fixability in toners, heat resistance, light fastness, etc..

The charge control agent of the present invention contains as an active ingredient a nigrosine compound [I] obtainable by reacting either C.I. Solvent Black 7 or C.I. Solvent Black 5 and one or more compounds selected from the group consisting of (a) sulfonic acid surface- active anionic organic compounds, (b) sulfuric acid ester surface-active anionic organic compounds and (c) phosphoric acid ester surface-active anionic organic compounds

Said nigrosine compound [I] is preferably a salt-forming compound or acid adduct salt represented by the general formula:

$$[\text{nigrosine}]^{+}\cdot A^{-}$$

wherein $[\text{nigrosine}]^{+}$ represents a dyestuff ion in C.I. Solvent Black 7 or C.I. Solvent Black 5; $A^{-}$ represents an organic acid anion from one of the above- described surface- active anionic organic compounds.

The surface- active anionic organic compound in said nigrosine compound [I], represented by A in the above formula, is preferably a sulfonic acid organic compound, a sulfuric acid ester organic compound or a phosphoric acid ester organic compound.

The surface-active sulfonic acid anionic organic compound, in particular, is preferably an alkylbenzenesulfonic acid or a salt thereof, an alkylnaphthalenesulfonic acid or a salt thereof, an alkylnaphthalenedisulfonic acid or a salt thereof, a dialkylnaphthalenedisulfonic acid or a salt thereof, or an alkyl diphenyl ether disulfonic acid or a salt thereof; the surface- active sulfuric acid ester anionic organic compound is preferably a higher alcohol sulfuric acid ester or a salt thereof, a polyoxyethylene alkyl ether sulfuric acid ester or a salt thereof, or a polyoxyethylene alkyl phenyl ether sulfuric acid ester or a salt thereof;

the surface- active phosphoric acid ester- series anionic organic compound is preferably an alkylphosphoric acid ester or a salt thereof, a polyoxyethylene alkyl phenyl ether phosphoric acid ester or a salt thereof, or a polyoxyethylene alkyl ether phosphoric acid ester or a salt thereof.

The toner of the present invention for developing electrostatic images comprises a resin for toners and coloring agent and contains as a charge control agent at least one of said nigrosine compound [I]. In other words, the toner of the present invention may contain one or more of said nigrosine compound [I].

The charge control agent contained in the toner of the present invention is excellent in charge control performance and capable of providing a very stable charge at a high rise speed, ensures high uniformity for the charge of the toner used because of good dispersibility and compatibility in resin for toners, and has good durability. It is also excellent in storage stability and stability to environmental changes such as those in temperature and humidity, and shows good offset resistance and fixability when used in toners. Also, the nigrosine charge control agent of the present invention is relatively easy to synthesize and relatively inexpensive to supply, and useful as a charge enhancer for electrostatic powder paints and as a charge-providing material for sleeves, doctor blades, carriers, etc., in copying machines and printing machines.

The toner of the present invention for developing electrostatic images is good in chargeability, fast in charge rise speed, excellent in charge stability, high in charge uniformity, excellent in stability to environmental changes and durability, and good in offset resistance and fixability.

C.I. Solvent Black 7 and C.I. Solvent Black 5, both used in the toner of the present invention, are nigrosine dyes. This kind of nigrosine dyes occur as a mixture of a large number of azine compounds, wherein the principal compound is known to be a purplish black dye having phenazine, phenazineazine, triphenazineoxazine or the like as the backbone structure. They can normally be obtained by redox condensation of aniline, aniline hydrochloride and nitrobenzene in the presence of iron chloride or another catalyst.

Nigrosine compound [I], used in the charge control agent and toner of the present invention, is the product of a reaction of either C.I. Solvent Black 7 or C.I. Solvent Black 5 and one or more compounds selected from the group consisting of (a) sulfonic acid, (b) sulfuric acid ester and, (c) phosphoric acid ester, and can be obtained in the form of a salt-forming compound or acid adduct salt.

Examples of C.I. Solvent Black 5 above include those commercially available under trade names of
Spirit Black SB,
Spirit Black SSBB,
Spirit Black AB, etc.
[all produced by Orient Chemical Industries Ltd.].

Examples of C.I. Solvent Black 7 above include those commercially available under trade names of
Nigrosine Base SA,
Nigrosine Base SAP,
Nigrosine Base SAPL,
Nigrosine Base EE,
Nigrosine Base EEL,
Nigrosine Base EX,
Nigrosine Base EXBP,
Special Black EB, etc.
[all produced by Orient Chemical Industries Ltd.].

Examples of the above-described surface- active sulfonic acid anionic organic compound include alkylbenzenesulfonic acids (or salts thereof, e.g., Na, K or ethanolamine salts),
alkylphenolsulfonic acids (or salts thereof),
alkyl diphenyl ether disulfonic acid (or salts thereof),
(lower) alkylnaphthalene(di)sulfonic acids (or salts thereof),
(lower) dialkylnaphthalenesulfonic acids (or salts thereof),
(lower) dialkylnaphthalenedisulfonic acids (or salts thereof),
dinaphthylmethanesulfonic acid (or salts thereof),
naphthalenesulfonic acid formalin condensation product (or salts thereof, e.g., Na, K. Li or Ca salts),
dialkylsulfosuccinic acids (or salts thereof),
monoalkylsulfosuccinic acids (or salts thereof),
sulfosuccinic acid monoalkylamides,
$\alpha$-sulfonic fatty acids (or salts thereof),
sulfoethanol fatty acid esters (or salts thereof),
alkylsulfoacetic acids (or salts thereof),
$\alpha$-olefinic sulfonic acids (or salts thereof),
fatty acid amidosulfonic acids (or salts thereof),

alkylsulfonic acids (or salts thereof), and
polyoxyethylene alkyl phenyl ether sulfonic acids (or salts thereof),
and are shown in Table 1.

## Table 1

| Compound | Chemical formula | Examples of R |
|---|---|---|
| Alkylsulfonates | $R-SO_3M$ | $C_{8-20}$ |
| α-Olefinic sulfonates | $R-CH=CHCH_2-SO_3M$ | $C_{12-15}$ |
| α-Sulfofatty acid salts | $R-CH(SO_3M)COOM$ | $C_{13}$, $C_{17}$ |
| Salts of sulfoethanol fatty acid esters | $R-COOCH_2CH_2-SO_3M$ | $C_{17=1}$ |
| Alkylsulfoacetates | $ROCOOCH_2-SO_3M$ | $C_{12-18}$, $C_{18=1}$ |
| Dialkylsulfosuccinates | $ROCOCH_2$<br>\|<br>$ROCOCH-SO_3M$ | $C_{2-20}$, 2-ethylhexyl |
| Monoalkylsulfosuccinates | $MOCOCH_2$<br>\|<br>$ROCOCH-SO_3M$ | $C_{12-18}$, $C_{18=1}$ |
| Fatty acid amidosulfonates | $R-CON(CH_3)C_2H_4-SO_3M$ | $C_{11-17}$, $C_{17=1}$ |
| Sulfosuccinic acid monoalkylamides | $R-NHCOCH_2CH(SO_3M)COOM$ | $C_{18}$ |
| Polyoxyethylene isooctyl phenyl ether sulfonates | $(CH_3)_3C-CH_2-C(CH_3)_2-(\phi)-$<br>$-OC_2H_4-OC_2H_4-SO_3M$ | |
| Lower alkylnaphthalenesulfonates | $R-(\phi\phi)-SO_3M$ | $C_{3-8}$ |
| Lower dialkylnaphthalenesulfonates | $(R)_2-(\phi\phi)-SO_3M$ | $C_{3-5}$ |
| Dinaphthylmethanesulfonates | $MO_3S-(\phi\phi)-CH_2-(\phi\phi)-SO_3$ | |
| Alkylphenolsulfonates | $R-(\phi-OH)-SO_3M$ | $C_{3-18}$ |
| Alkylbenzenesulfonates | $R-(\phi)-SO_3M$ | $C_{10-18}$ |
| Alkyl diphenyl ether disulfonates | $R-(\phi)-O-(\phi)$<br>\| \|<br>$SO_3M$ $SO_3M$ | $C_{12}$ |

In the chemical formulas shown in Table 1 above and Tables 2 and 3 below, R represents a saturated or unsaturated chain hydrocarbon group such as an alkyl group or an alkenyl group; M represents H (hydrogen), an alkali metal such as Na or K, Ca, $NH_4$, or an alkanolamine or alkanolammonium; ( φ ) represents a benzene ring; ( φ φ ) represents a naphthalene ring; n represents a positive integer. With respect to the examples of R, $C_{12-18}$, for example, means that the number of carbon atoms in R is 12 to 18, and $C_{17=1}$ means that 17 carbon atoms are present and include one double bond.

Examples of surface- active sulfuric acid ester anionic organic compounds include
higher (long- chain) alcohol sulfuric acid esters (or salts thereof),
secondary higher alcohol sulfuric acid esters (or salts thereof),
olefine sulfuric acid esters (or salts thereof),
fatty acid ethyleneglycollide sulfuric acid esters (or salts thereof),
polyoxyethylene alkyl ether sulfuric acid esters (or salts thereof),
polyoxyethylene alkyl phenyl ether sulfuric acid esters (or salts thereof),
fatty acid monoglyceride sulfuric acid esters (or salts thereof),
fatty acid polyhydric alcohol sulfuric acid esters (or salts thereof),
(highly) sulfated oils,
fatty acid alkyl sulfuric acid esters (or salts thereof),
fatty acid amide sulfuric acid esters (or salts thereof),
fatty acid anilide sulfuric acid esters (or salts thereof),
and fatty acid monoalkanolamide sulfuric acid esters (or salts thereof),
and are shown in Table 2.

Table 2

| Compound | Chemical formula | Examples of R |
|---|---|---|
| Long－chain alcohol sulfuric acid esters | $ROSO_3M$ | $C_{8-18}$、 oleyl |
| Secondary alcohol sulfuric acid esters | $C_4H_9CH\ (C_2H_5)\ C_2H_4CHCH_2CH\ (CH_3)_2$<br>\|<br>$OSO_3M$ | |
| Olefin sulfuric acid esters | $R-CHCH_2R'$<br>\|<br>$OSO_3M$ | $C_{12-14}$ |
| Fatty acid ethyleneglycollide sulfuric acid esters | $R-COOCH_2CH_2OSO_3M$ | $C_{11-17}$<br>$C_{17=1}$ |
| Polyoxyethylene alkyl ether sulfuric acid esters | $R-\ (OCH_2CH_2)_nOSO_3M$ | $C_{12-18}$<br>n is 2 or more. |
| Polyoxyethylene alkyl phenyl ether sulfuric acid esters | $R-\ (\phi)\ -\ (OCH_2CH_2)_nOSO_3M$ | $C_{8-9}$<br>n is 2 or more. |
| Fatty acid monoglyceride sulfuric acid esters | $R-COOCH_2CH\ (OH)\ CH_2OSO_3M$ | $C_{11-17}$<br>$C_{17=1}$ |
| Fatty acid polyhydric alcohol sulfuric acid esters | Sulfates of polyethyleneglycol monofatty acid esters | |
| Sulfated oils | Sulfates or sulfuric acid esters of olive oil, castor oil, beef tallow, etc. | |
| Highly sulfated oils | Higher sulfates of castor oil etc. | |
| Fatty acid alkyl sulfuric acid esters | Complete sulfides of propyl, butyl or amyl ester of oleic acid or ricinoleic acid | |
| Fatty acid amide sulfuric acid esters | $CH_3\ (CH_2)_8CH\ (CH_2)_7CONH_2$<br>\|<br>$OSO_3M$ | |
| | $CH_3\ (CH_2)_8CH\ (CH_2)_7CON\ (C_4H_9)_2$<br>\|<br>$OSO_3M$ | |
| Fatty acid anilide sulfuric acid esters | $CH_3\ (CH_2)_8CH\ (CH_2)_7CONH-\ (\phi)\ -\ (OCH_3\ (para))$<br>\|<br>$OSO_3M$ | |
| | $CH_3\ (CH_2)_8CH\ (CH_2)_7CON\ (C_4H_9)_2$<br>\|<br>$OSO_3M$ | |
| Fatty acid monoalkanolamide sulfuric acid esters | $R-CONHCH_2CH_2OSO_3M$ | $C_{11-17}$ |
| | $R-CONHCH_2CHOSO_3M$<br>\|<br>$CH_3$ | $C_{17=1}$ |

Examples of surface-active phosphoric acid ester anionic organic compounds include alkylphosphoric acid esters (or salts thereof),
polyoxyethylene alkyl ether phosphoric acid esters (or salts thereof) and
polyoxyethylene alkyl phenyl ether phosphoric acid esters (or salts thereof),
and are shown in Table 3.

Table 3

| Compound | Chemical formula | Examples of R |
|---|---|---|
| Salts of alkylphosphoric acid esters | RO - PO $(OM)_2$ | $C_8$, 2-ethylhexyl |
| Salts of polyoxyethylene alkyl phenyl ether phosphoric acid esters | R- (ϕ) -O- $(CH_2CH_2O)_nPO$ $(OM)_2$ | $C_{8-9}$ n is 2 or more. |
| Salts of polyoxyethylene alkyl ether phosphoric acid esters | RO $(CH_2CH_2O)_nPO$ $(OM)_2$ | $C_{12-18}$ n is 2 or more. |

Of the above- mentioned anionic organic compounds, preference is given to alkylbenzenesulfonic acids (or salts thereof, e.g., Na, K or ethanolamine salts),
alkyl diphenyl ether disulfonic acids (or salts thereof),
(lower) alkylnaphthalene(di)sulfonic acids (or salts thereof),
(lower) dialkylnaphthalenesulfonic acids (or salts thereof),
(lower) dialkylnaphthalenedisulfonic acids (or salts thereof),
polyoxyethylene alkyl phenyl ether sulfonic acids (or salts thereof),
higher (long- chain) alcohol sulfuric acid esters (or salts thereof),
polyoxyethylene alkyl ether sulfuric acid esters (or salts thereof),
polyoxyethylene alkyl phenyl ether sulfuric acid esters (or salts thereof),
polyoxyethylene alkyl ether phosphoric acid esters (or salts thereof), and
polyoxyethylene alkyl phenyl ether phosphoric acid esters (or salts thereof).

Of the above- mentioned anionic organic compounds, the alkylbenzenesulfonic acids (or salts thereof) represented by the formula shown below are particularly preferable.

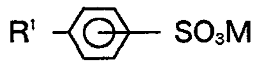 •••• (a)

With respect to formula (a), $R^1$ represents an alkyl group, preferably an alkyl group having 3 to 20 carbon atoms, more preferably an alkyl group having 10 to 20 carbon atoms; M represents H (hydrogen), an alkali metal such as Na or K, Ca, $NH_4$, or an alkanolamine or alkanolammonium.

Useful alkylbenzenesulfonic acid surface- active anionic organic compounds include, for example, those commercially available under the trade names shown below. NEWREX Base H, NEWREX Powder F, NEWREX R, NEWREX Base Soft 30, NEWREX Base Soft 60, NEWREX RS, Osen A, Osen S, Soft Senzai 550A and Soft Senzai 5S (all produced by NOF CORPORATION);
Neopelex 05 Powder, Neopelex No6, Neopelex F-60, Neopelex F-25 and Neopelex NolF Powder (all produced by Kao Corporation);
SANDET 60 (produced by Sanyo Kasei Co., Ltd.);
Neogen R and Neogen SC (both produced by Dai- ichi Kogyo Seiyaku Co., Ltd.);
MINELITE LA, MINELITE 100, MINELITE 200, LIGHTCLEAN P and EMAMINE CS (all produced by KYOEISHA YUSHIKAGAKUKOGYO Co., Ltd.);
Luminox 100, Luminox S-100, Luminox P - 8 0 and Luminox P - 05L (all produced by Toho Chemical Industry Co., Ltd.);
Lipon LH-200, Lipon LH-500, Lipon LH-600, Lipon LH-900, Lipon LS- 250, Lipon LS- 625, Lipon LT- 240, Lipon LT-270, Lipon LC-960, Lipon PS-230, Lipon PS-260 and Lipon PS-860 (all produced by Lion Corporation);
Lavajon C (produced by Matsumoto Yushi Co., Ltd.); and
DBS- 100, DBS- 90, SBS- 100, DBS-12-100, SBS-13-100, DBN- 600 and SBN-12-65 (all produced by Teikoku Kako Co., Ltd.).

The above-described alkyl diphenyl ether disulfonic acid (or a salt thereof) is represented by the formula shown below.

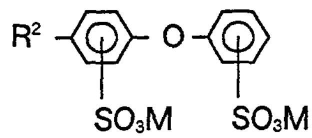

···· (b)

With respect to formula (b), $R^2$ represents an alkyl group, preferably an alkyl group having 10 to 18 carbon atoms (e.g., alkyl group having 12 carbon atoms); M represents H (hydrogen), an alkali metal such as Na or K, Ca, $NH_4$, or an alkanolamine or alkanolammonium.

Alkyl diphenyl ether disulfonic acid surface- active anionic organic compounds include, for example, those commercially available under the trade names PELEX SS- L and PELEX SS-H (both produced by Kao Corporation); and SANDET AL, SANDET ALH and SANDET B (all produced by Sanyo Kasei Co., Ltd.).

The above- described (di)alkylnaphthalene(di)sulfonic acid (or a salt thereof) is represented by the formula shown below.

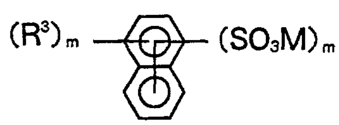

···· (c)

With respect to formula (c), m represents 1 or 2; $R_3$ represents an alkyl group (provided that m is 2, the two alkyl groups may be identical or not), preferably an alkyl group having 3 to 8 carbon atoms; M represents H (hydrogen), an alkali metal such as Na or K, Ca, $NH_4$, or an alkanolamine or alkanolammonium.

(Di)alkylnaphthalene(di)sulfonic acid surface- active anionic organic compounds include, for example, those commercially available under the trade names Pelex NB Paste and Pelex NB- L (both produced by Kao Corporation); and Solvalite BX (produced by KYOEISHA YUSHIKAGAKUKOGYO Co., Ltd.).

The above- described polyoxyethylene alkyl phenyl ether sulfonic acid (or a salt thereof) is represented by the formula shown below.

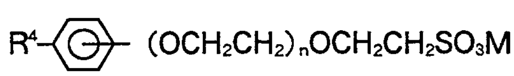

···· (d)

With respect to formula (d), $R^4$ represents an alkyl group, preferably an alkyl group having 5 to 10 carbon atoms; n represents an integer of 2 or more; M represents H (hydrogen), an alkali metal such as Na or K, Ca, $NH_4$, or an alkanolamine or alkanolammonium.

Polyoxyethylene alkyl phenyl ether sulfonic acid surface- active anionic organic compounds include, for example, those commercially available under the trade names Lionol OAI-N, Lionol OBI and Lionol OBI - N (all produced by Lion Corporation).

The above- described polyoxyethylene alkyl phenyl ether sulfuric acid ester (or a salt thereof) is represented by the formula shown below.

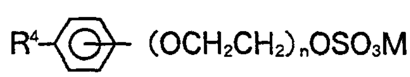

···· (e)

With respect to formula (e), $R^4$ represents an alkyl group, preferably an alkyl group having 5 to 10 carbon atoms; n represents an integer of 2 or more; M represents H (hydrogen), an alkali metal such as Na or K, Ca, $NH_4$, or an alkanolamine or alkanolammonium.

Polyoxyethylene alkyl phenyl ether sulfuric acid ester surface- active anionic organic compounds include, for example, those commercially available under the trade names EMAL NC-35 and LEVENOL WZ (both produced by

Kao Corporation); Nonipol S-40 (produced by Sanyo Kasei Co., Ltd.); Hitenol N-07, Hitenol N-08, Hitenol N-17, Hitenol NE-05, Hitenol NE-15 and Hitenol NF-13 (all produced by Dai-ichi Kogyo Seiyaku Co., Ltd.); Peletex 1220S (produced by Miyoshi Oil & Fat Co., Ltd.); and SUN NOL NP-2030, SUN NOL OP-2630, SUN NOL NP-1530, SUN NOL NP- 1930, SUN NOL NP- 6130 and SUN NOL OP- 3330 (all produced by Lion Corporation).

The above-described phosphoric acid ester surface - active anionic organic compound is represented by the formulas shown below.

$$R^5O\text{- }PO(OM)_2 \qquad (f)$$

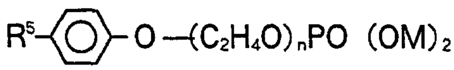

···· (g)

$$R^5O\{C_2H_4O)_nPO\ (OM)_2 \qquad (h)$$

With respect to these formulas (f), (g) and (h), $R^5$ represents an alkyl group, a substituted or unsubstituted aryl group or a substituted or unsubstituted aralkyl group; M represents H (hydrogen), an alkali metal such as Na or K, Ca, $NH_4$, or an alkanolamine or alkanolammonium; n represents an integer of 2 or more.

Phosphoric acid ester surface- active anionic organic compounds include, for example, those commercially available under the trade names Plysurf A212E, Plysurf A217E, Plysurf A210G and Plysurf A207H (all produced by Dai- ichi Kogyo Seiyaku Co., Ltd.), PHOSPHANOL RE- 410, PHOSPHANOL RE- 510, PHOSPHANOL RE- 610, PHOSPHANOL RE- 960, PHOSPHANOL RM- 410, PHOSPHANOL RM- 510, PHOSPHANOL RM- 710, PHOSPHANOL RE-210, PHOSPHANOL RP- 710 and PHOSPHANOL LO- 529 (all produced by Toho Chemical Industry Co., Ltd.); and Ripofac PN- 510, Ripofac PN- 529, Ripofac PO- 720 and Ripofac RM- 510 (all produced by Lion Corporation).

Examples of the alkyl group represented by $R^1$, $R^2$, $R^3$, $R^4$ or $R^5$ include saturated alkyl group having 1 to 20 carbon atoms that is branched or not branched, such as methyl, ethyl, propyl, isopropyl, n- butyl, isobutyl, tert- butyl, isoamyl, octyl, tert- octyl, 2- ethylhexyl and dodecyl, and monovalent unsaturated chain hydrocarbon group that may contain 1 or 2 double carbon bonds.

Examples of the substituted or unsubstituted aryl group represented by $R^5$ include aryl groups such as phenyl and naphthyl groups with or without a nuclear substituent of lower alkyl groups such as methyl and ethyl, alkoxy groups such as methoxy and ethoxy, halogens such as chlorine, bromine, iodine, fluorine and so on.

Examples of the substituted or unsubstituted aralkyl group represented by $R^5$ include benzyl, $\alpha$ , $\alpha$- dimethylbenzyl, phenethyl and naphthylalkyl groups with or without a nuclear substituent of lower alkyl groups such as methyl and ethyl, alkoxy groups such as methoxy and ethoxy, halogens such as chlorine, bromine, iodine, fluorine and so on.

In the present invention, nigrosine compound [I] can be synthesized by any known method without limitation, as long as the above-described conventional nigrosine (dye) and the above - described surface - active anionic organic compound are reacted. Although the reaction can be carried out both in an aqueous system and in a non- aqueous system (organic solvent system), it is preferable that the anionic surfactant used in the reaction in an aqueous system or a water- organic solvent system be a water-soluble salt.

Also, when synthesis of nigrosine compound [I] in the present invention is conducted using nigrosine and a surface- active anionic organic compound, their charge molar ratio is preferably 0.3 to 1.5 mol of the anionic compound, e.g., an anionic compound represented by one of formulas (a) through (h) above, per about 1 mol of nigrosine, provided that the putative molecular weight of nigrosine is 600 (because nigrosine is a mixture of azine compounds, its average molecular weight is not accurately determinable). If the molar ratio is lower than 0.3, the improving effect on the dispersibility in resin for toners decreases; if it exceeds 1.5, the resulting black charge control agent is likely to melt and tends to be difficult to take out as a solid. The molar ratio is more preferably 0.7 to 1.0 mol.

Also, in synthesizing nigrosine compound [I] in the present invention, a dispersing agent may be added as necessary. The amount of dispersing agent used may be about 5% by weight or lower relative to the starting material nigrosine.

Such dispersing agents include, for example, those commercially available under the trade names Solsperse #3000, Solsperse #13550, Solsperse #17000, Solsperse #24000 and Solsperse #24000GR (all produced by ICI, trade names); and EMULGEN A- 60, EMULGEN A- 90, EMULGEN A- 550, EMULGEN B- 66, EMULGEN L- 40, EMULGEN 306P, EMULGEN 404, EMULGEN 420 , EMULGEN 705, EMULGEN 810, EMULGEN 903, EMULGEN 905, RHEODOL TW- L, RHEODOL TW- S120, RHEODOL TW- 320, Emanon 1112, Emanon 3115 and Emanon 3299 (all produced by

Kao Corporation, trade names).

The nigrosine compound [I] thus obtained was proven to be distinct from the starting material nigrosine by TLC and IR spectrum analysis.

The toner of the present invention for developing electrostatic images contains at least one of said nigrosine compound [I] as a charge control agent and comprises a coloring agent and a resin for toners.

Desirably, the toner of the present invention for developing electrostatic images incorporates 0.1 to 10 parts by weight of nigrosine compound [I] per 100 parts by weight of resin. More preferably, nigrosine compound [I] is contained at 0.5 to 5 parts by weight per 100 parts by weight of resin for toners.

Examples of resins used in the toner of the present invention include the following known resins for toners (binder resins). Specifically, polyester resin, styrene resin, styrene-acrylic resin, styrene-butadiene resin, styrene-maleic acid resin, styrene- vinyl methyl ether resin, styrene- methacrylic acid ester copolymer, phenol resin, epoxy resin, polypropylene resin, paraffin wax, etc. may be used singly or in blends.

From the viewpoint of toner fixability on paper, offset resistance to rollers, toner blocking resistance during storage, etc., resins for toners are required to have appropriate hot melt property, elasticity, fluidity, etc. Such resins include, for example, acrylic resin, styrene- acrylic resin, styrene- methacrylic acid ester copolymer and polyester resin.

As coloring agents for black toners, carbon black for coloring (coloring black) is normally used. Such kinds of carbon black include, for example, those commercially available under the trade names MA100, MA11, MA8, MA7, #40 and #44 (all produced by Mitsubishi Chemical Corporation); Raven 1250 (produced by Columbian Carbon); Monarck 880, MOGUL L and MOGUL 660R (all produced by Cabot Corporation); and Color Black FW2, Special Black 250 and Printex 90 (all produced by Degussa Japan Co., Ltd.).

Also, various known dyes and pigments can be used in combination as necessary. Examples of such pigments include organic pigments such as quinophthalone yellow, hansa yellow, isoindolinone yellow, perinone orange, perirene maroon, rhodamine 6G lake, quinacridone, anthanthrone red, rose bengale, copper phthalocyanine blue, copper phthalocyanine green and diketopyrrolopyrrole pigments; and inorganic pigments such as titanium white, titanium yellow, ultramarine, cobalt blue and red iron oxide.

To improve toner quality, additives such as anti-offset agents, fluidity- improving agents and cleaning aids may be added internally or externally.

Anti- offset agents (releasing agents) which can be used to improve toner fixability include various known waxes, particularly polyolefin type waxes such as low molecular weight polypropylene, polyethylene, oxidized polypropylene and oxidized polyethylene; and natural waxes such as carnauba wax, rice wax and montan wax.

Useful fluidity- improving agents include various metal oxides such as silica, aluminum oxide and titanium oxide, and magnesium fluoride.

Useful cleaning aids include metal soaps of stearic acid etc.; and various synthetic resin microparticles such as fluorine, silicone or styrene- (meth)acrylic synthetic resin microparticles.

Also, according to the mode of developing using the toner of the present invention, electroconductive substances (e.g., electroconductive carbon black, graphite), magnetic microparticles [e.g., known ferromagnetic microparticles such as those of ferromagnetic metals (e.g., iron, cobalt, nickel), various alloys, and oxides thereof (e.g., ferrite)], etc., can be added to the toner.

The toner of the present invention for developing electrostatic images is, for example, produced as described below. A toner having an average particle diameter of 5 to 20 μm can be obtained by thoroughly mixing the above-described nigrosine compound [I], a resin for toners and coloring agent as described above, and, if necessary, a magnetic material, a fluidizing agent and other additives, using a ball mill or another mechanical mixer, subsequently kneading the mixture in a molten state using a hot kneader such as a heat roll, kneader or extruder, cooling and solidifying the mixture, then pulverizing the solid and classifying the resulting particles by size.

Other usable methods include the method in which starting materials are dispersed in a solution of a resin for toners and subsequently spray dried, and the polymerizing toner production method in which a given set of starting materials are mixed in a monomer to constitute a resin for toners to yield an emulsified suspension, which is then polymerized to yield the desired toner.

When the toner of the present invention for developing electrostatic images is used as a two- component developer, development can be achieved by the two- component magnetic brush developing process or the like using the toner in mixture with carrier powder.

Any known carrier can be used. Examples of the carrier include iron powder, nickel powder, ferrite powder and glass beads about 50 to 200 μm in particle diameter, and such materials as coated with acrylic acid ester copolymer, styrene-acrylic acid ester copolymer, styrene- methacrylic acid ester copolymer, silicone resin, polyamide resin, ethylene fluoride resin or the like.

When the toner of the present invention for developing electrostatic images is used as a one- component developer, fine powder of a ferromagnetic material such as iron powder, nickel powder or ferrite powder may be added and dispersed in preparing the toner as described above. Examples of developing processes which can be used in

this case include contact development and jumping development.

Figure 1 shows actual measurements of the amount of charges of the developers prepared in Example 15 and Comparative Example 1.

Figure 2 shows actual measurements of the amount of charges of the developers prepared in Example 16 and Comparative Example 2.

Figure 3 is a diagram for determination of the charge rise speeds of the developers prepared in Example 15 and Comparative Example 1.

Figure 4 is a diagram for determination of the charge rise speeds of the developers prepared in Example 16 and Comparative Example 2.

## EXAMPLES

The present invention is hereinafter described in more detail by means of the following examples, which are not to be construed as limitative.

Examples 1 through 14 pertain the synthesis of nigrosine compound [I] as the charge control agent of the present invention.

### Example 1

To 1,000 ml of water, 38g of an alkylbenzenesulfonic acid (anionic surfactant produced by Lion Corporation, trade name Lipon HL-200) was added, followed by stirring at 40°C for 1 hour.

To this mixture, 100 g of Nigrosine Base EX (trade name for "C.I. Solvent Black 7" produced by Orient Chemical Industries Ltd.) was added, followed by stirring at 75 to 85°C for 5 to 8 hours to cause the reaction. The reaction product was then collected by filtration, washed with water, dried, and milled to yield 132 g of a charge control agent (Example Compound 1).

### Example 2

100 g of Nigrosine Base EX (trade name for "C.I. Solvent Black 7" produced by Orient Chemical Industries Ltd.) was dispersed in 300 g of ethanol and heated to 60°C, after which 38 g of an alkylbenzenesulfonic acid (anionic surfactant produced by Lion Corporation, trade name Lipon LH- 200) was added.

This mixture was heated to 80°C and reacted for 3 hours. The reaction mixture was then filtered, while it remained hot; the solvent was evaporated and recovered from the filtrate using a rotary evaporator (produced by Tokyo Rika, trade name: N- 2- 29) to yield 131 g of a charge control agent (Example Compound 2).

### Examples 3 through 13

Respective charge control agents were obtained in the same manner as in Example 1 or 2, except that the respective alkylbenzenesulfonic acids (salts) used in the above Examples were replaced with the compounds (anionic surfactants) shown in Table 4. In Examples 5, 6, 7 and 10, Nigrosine Base EX was replaced with Spirit Black SB (trade name for "C.I. Solvent Black 5" produced by Orient Chemical Industries Ltd.).

Table 4

| | Anionic surfactants | | | Example control | charge agents |
|---|---|---|---|---|---|
| Example No. | Compound (trade name) | A (%) | B (g) | Yield (g) | Example Compound No. |
| Example 3 | Alkylbenzenesulfonic acid (α) | 96 | 27 | 120 | (3) |
| Example 4 | Alkylbenzenesulfonic acid (α) | 96 | 54 | 146 | (4) |
| Example 5 | Alkylnaphthalenesulfonic acid Na salt (β) | 35 | 95 | 96 | (5) |
| Example 6 | Alkylnaphthalenesulfonic acid Na salt (β) | 35 | 136 | 111 | (6) |
| Example 7 | Alkyl diphenyl ether disulfonic acid Na salt (γ) | 45 | 143 | 107 | (7) |

Table 4 (continued)

| | Anionic surfactants | | | Example control | charge agents |
|---|---|---|---|---|---|
| Example No. | Compound (trade name) | A (%) | B (g) | Yield (g) | Example Compound No. |
| Example 8 | Polyoxyethylene alkyl phenyl ether sulfuric acid ester (δ) | 92 | 53 | 139 | (8) |
| Example 9 | polyoxyethylene alkyl phenyl ether sulfuric acid ester (δ) | 92 | 75 | 159 | (9) |
| Example 10 | Polyoxyethylene alkyl phenyl ether ethanesulfonic acid ester (ε) | 19 | 233 | 129 | (10) |
| Example 11 | Alkylbenzenesulfonic acid (α) | 96 | 27 | 123 | (11) |
| | Alkylnaphthalenesulfonic acid Na salt (β) | 35 | 47 | | |
| Example 12 | Alkylbenzenesulfonic acid (α) | 96 | 27 | 138 | (12) |
| | Polyoxyethylene alkyl phenyl ether phosphoric acid ester (ζ) | 99 | 35 | | |
| Example 13 | Polyoxyethylene alkyl phenyl ether phosphoric acid ester (ζ) | 99 | 60 | 132 | (13) |

The symbols in Table 4 are defined as follows:

( α ) Lipon HL-200 (produced by Lion Corporation)
( β ) Pelex NB-L (produced by Kao Corporation)
( γ ) Sandet BL (produced by Sanyo Kasei Co., Ltd.)
( δ ) Hitenol N- 07 (produced by Dai- ichi Kogyo Seiyaku Co., Ltd.)
( ε ) Lionol OAI (produced by Lion Corporation)
( ζ ) Phosphanol RE- 210 (produced by Toho Chemical Industry Co., Ltd.)
A: Amount of active ingredient
B: Amount of surfactant used for synthesis

Example 14 (synthesis in the presence of additional dispersing agent)

100 g of Nigrosine Base EX (trade name for "C.I. Solvent Black 7" produced by Orient Chemical Industries Ltd.) was dispersed in 300 g of ethanol and heated to 60 °C , after which 38 g of an alkylbenzenesulfonic acid (anionic surfactant produced by Lion Corporation, trade name Lipon LH-200) and 5 g of Solsperse #13550 (trade name for dispersing agent produced by ICI) were added.
This mixture was heated to 80°C and reacted for 3 hours. The reaction mixture was then filtered, while it remained hot; the solvent was evaporated and recovered from the filtrate using a rotary evaporator (produced by Tokyo Rika, trade name: N- 2- 29) to yield 129 g of a charge control agent (Example Compound 14).
Examples 15 through 19 pertain the toner of the present invention for developing electrostatic images, which incorporates nigrosine compound [I] as a charge control agent. In the description below, "part(s) by weight" are referred to as "part(s)" for short.

Example 15

Polyester resin [HP- 313, produced by The Nippon Synthetic Chemical Industry, Co., Ltd.]... 100 parts
Carbon black [MA - 100, produced by Mitsubishi Chemical Industries, Ltd.]... 7 parts
Low polymer polypropylene [Biscal 550P, produced by Sanyo Kasei Co., Ltd.]... 3 parts
Charge control agent (Example Compound 1)... 2 parts
The above ingredients were uniformly pre- mixed using a high- speed mixer. The mixture was then kneaded in a molten state using a heat roll and cooled, after which it was roughly milled in a vibration mill. The coarse product obtained was finely pulverized using an air jet mill equipped with a classifier to yield a positively chargeable black toner of 5 to 15 μm in particle diameter.
Five parts of this toner was admixed with 95 parts of an iron powder carrier [TEFV 200/300, produced by

Powdertech Co., Ltd.) to yield a developer.

When this developer was used for repeated cycles of actual imaging, high-quality black images free of fogging etc. were obtained, with good charge rise, charge stability and sustainability, and stable image density both in the initial stage and after continuous copying.

[Charge properties]

After this developer was mixed, the amount of blowoff charges was determined at each time point using a blowoff charge analyzer (produced by Toshiba Chemical Corporation). The results are shown in Figure 1.

Also, time t (min) after mixing initiation, the amount of charges [q( μC/g)] at time t, and the maximum amount of charges [qe( μC/g)] were substituted in the equation shown below for plotting, and the charge rise property (charge rise speed) constant k was determined from the gradient of the plot. The results are shown in Figure 3 and Table 5 below.

$$\ln \frac{qe - q}{qe} = - kt$$

Example 16

Polyester resin [HP- 310, produced by The Nippon Synthetic Chemical Industry, Co., Ltd.]... 100 parts
Carbon black [MA - 100, produced by Mitsubishi Chemical Industries, Ltd.]... 7 parts
Low polymer polypropylene [Biscal 550P, produced by Sanyo Kasei Co., Ltd.]... 3 parts
Charge control agent (Example Compound 5)... 2 parts

The above ingredients were treated in the same manner as in Example 15 to yield a positively chargeable toner and a developer.

When this developer was used for repeated cycles of actual imaging, high-quality black images free of fogging etc. were obtained, with good charge rise, charge stability and sustainability, and stable image density both in the initial stage and after continuous copying.

For this developer, the charge rise property was assessed in the same manner as in Example 15. The results are shown in Figures 2 and 4 and Table 5.

Example 17

Polyester resin [HP- 320, produced by The Nippon Synthetic Chemical Industry, Co., Ltd.]... 100 parts
Carbon black [MA - 100, produced by Mitsubishi Chemical Industries, Ltd.]... 7 parts
Low polymer polypropylene [Biscal 550P, produced by Sanyo Kasei Co., Ltd.]... 3 parts
Charge control agent (Example Compound 9)... 2 parts

The above ingredients were treated in the same manner as in Example 15 to yield a positively chargeable toner and a developer.

When this developer was used for repeated cycles of actual imaging, high-quality black images free of fogging etc. were obtained, with good charge rise, charge stability and sustainability, and stable image density both in the initial stage and after continuous copying.

Example 18

Styrene- acrylic copolymer resin [HIMER SMB600, produced by Sanyo Kasei Co., Ltd.]... 100 parts
Carbon black [Raven 1250, produced by Columbian Carbon]... 7 parts
Low polymer polypropylene [Biscal 550P, produced by Sanyo Kasei Co., Ltd.]... 3 parts
Charge control agent (Example Compound 7)... 2 parts

The above ingredients were treated in the same manner as in Example 15 to yield a positively chargeable toner and a developer.

When this developer was used for repeated cycles of actual imaging, high-quality black images free of fogging etc. were obtained, with good charge rise, charge stability and sustainability, and stable image density both in the initial stage and after continuous copying.

Example 19

Styrene- 2- ethylhexyl methacrylate copolymer resin (80/20)... 100 parts
Tri- iron tetroxide [EPT - 500, produced by Toda Kogyo Corporation]... 50 parts

Low polymer polypropylene [Biscal 550P, produced by Sanyo Kasei Co., Ltd.]... 3 parts
Carbon black [MA - 100, produced by Mitsubishi Chemical Industries, Ltd.]... 6 parts
Charge control agent (Example Compound 14)... 2 parts

The above ingredients were uniformly pre- mixed using a ball mill to yield a premix, which was then kneaded in a molten state at 180°C using a heat roll, cooled and thereafter roughly milled, finely pulverized and classified by size to yield a one- component toner having a particle diameter range from 5 to 15 µm.

When this toner was used for a commercial copying machine to form toner images, high- quality images were obtained both in the initial stage and after continuous copying.

Comparative Example 1

A comparative toner and a comparative developer were prepared and the charge rise property was assessed in the same manner as in Example 15, except that the charge control agent used in Example 15 (Example Compound 1) was replaced with Nigrosine Base EX [nigrosine (C.I. Solvent Black 7)produced by Orient Chemical Industries Ltd.]. The results are shown in Figures 1 and 3 and Table 5.

Comparative Example 2

A comparative toner and a comparative developer were prepared and the charge rise property was assessed in the same manner as in Example 16, except that the charge control agent used in Example 16 (Example Compound 5) was replaced with Spirit Black SB [nigrosine (C.I. Solvent Black 5) produced by Orient Chemical Industries Ltd.]. The results are shown in Figures 2 and 4 and Table 5.

Table 5

| | Charge rise speed constant: k |
|---|---|
| Example 15 | 0.1539 $min^{-1}$ |
| Comparative Example 1 | 0.0246 $min^{-1}$ |
| Example 16 | 0.1300 $min^{-1}$ |
| Comparative Example 2 | 0.0233 $min^{-1}$ |

Comparative Example 3

Using Basic Blue 7 and stearic acid (salt), a triarylmethane- based charge control agent was synthesized in the same manner as in Example 1.

Using the charge control agent obtained, a toner was prepared in the same manner as in Example 15. The amount of charges of this toner was determined to be not greater than 10 µC/g, a level not practical for a charge control agent.

## Claims

1. Toner for developing electrostatic images that comprises a resin for toners and a coloring agent **characterized in that** it contains as a charge control agent at least one of nigrosine compound [I] obtainable by reacting either C. I. Solvent Black 7 or C.I. Solvent Black 5 and one or more compounds selected from the group consisting of (a) sulfonic acid surface - active anionic organic compounds, (b) sulfuric acid ester surface - active anionic organic compounds and (c) phosphoric acid ester surface - active anionic organic compounds.

2. Toner of claim 1 for developing electrostatic images wherein the nigrosine compound [I] is a salt - forming compound or acid adduct salt represented by the general formula:

$$[\text{nigrosine}]^{+}A^{-}$$

wherein $[\text{nigrosine}]^{+}$ represents a dyestuff ion in C.I. Solvent Black 7 or C.I. Solvent Black 5; $A^{-}$ represents an organic acid anion from one of the surface - active anionic organic compounds as defined in claim 1.

3. Toner of claim 1 or 2 wherein the surface - active sulfonic acid anionic organic compound is a compound selected from the group consisting of an alkylbenzenesulfonic acid or a salt thereof, an alkylnaphthalenesulfonic acid or a salt threof, an alkylnaphthalenedisulfonic acid or a salt thereof, a dialkylnaphthalenedisulfonic acid or a salt thereof, and an alkyl diphenyl ether disulfonic acid or a salt thereof.

4. Toner of claim 1 or 2 wherein the surface - active sulfuric acid ester anionic organic compound is a compound selected from the group consisting of a higher alcohol sulfuric acid ester or a salt thereof, a polyoxyethylene alkyl ether sulfuric acid ester or a salt thereof, and a polyoxyethylene alkyl phenyl ether sulfuric acid ester or a salt thereof.

5. Toner of claim 1 or 2 wherein the surface - active phosphoric acid ester anionic organic compound is a compound selected from the group consisting of an alkylphosphoric acid ester or a salt thereof, a polyoxyethylene alkyl phenyl ether phosphoric acid ester or a salt thereof, and a polyoxyethylene alkyl ether phosphoric acid ester or a salt thereof.

**Patentansprüche**

1. Toner zur Entwicklung elektrostatischer Bilder,
der ein Harz für die Toner und ein Farbmittel enthält,
**dadurch gekennzeichnet, dass**
als Ladungssteuerungsmittel wenigstens eine Nigrosin-Verbindung (I) vorhanden ist, die erhältlich ist, durch Umsetzung von entweder C.I. Solvent Black 7 oder C.I. Solvent Black 5 und einer oder mehreren Verbindung(en), ausgewählt aus:

   (a) oberflächenaktive, anionische, organische Sulfonsäure-Verbindungen,
   (b) oberflächenaktive, anionische, organische Schwefelsäureester-Verbindungen, und
   (c) oberflächenaktive, anionische, organische Phosphorsäureester-Verbindungen.

2. Toner nach Anspruch 1,
zur Entwicklung elektrostatischer Bilder,
**dadurch gekennzeichnet, dass**
die Nigrosin-Verbindung (I) eine salzbildende Verbindung oder ein Säureadduktsalz ist, je entsprechend der nachstehenden allgemeinen Formel

$$[\text{Nigrosin}]^{+}A^{-}$$

wobei:
$[\text{Nigrosin}]^{+}$ steht für ein Farbstoffion, das in C.I. Solvent Black 7 oder in C.I. Solvent Black 5 enthalten ist; und
$A^{-}$ steht für ein organisches Säureanion aus einer der in Anspruch 1 angegebenen oberflächenaktiven, anionischen, organischen Verbindungen.

3. Toner nach Anspruch 1 oder 2,
**dadurch gekennzeichnet, dass**
die oberflächenaktive, anionische, organische Sulfonsäure-Verbindung eine der nachstehenden Verbindungen ist, nämlich:

   - eine Alkylbenzolsulfonsäure oder ein Salz davon,
   - eine Alkylnaphthalinsulfonsäure oder ein Salz davon,
   - eine Alkylnaphthalindisulfonsäure oder ein Salz davon,
   - eine Dialkylnaphthalin-disulfonsäure oder ein Salz davon, oder
   - eine Alkyl-diphenylether-disulfonsäure oder ein Salz davon.

4. Toner nach Anspruch 1 oder 2,
**dadurch gekennzeichnet, dass**
die oberflächenaktive, anionische, organische Schwefelsäureester-Verbindung eine der nachstehenden Verbindungen ist, nämlich

- ein Ester der Schwefelsäure mit einem höheren Alkohol oder ein Salz davon,
- ein Ester der Schwefelsäure mit einem Polyoxyethylen-alkylether oder ein Salz davon, oder
- ein Ester der Schwefelsäure mit einem Polyoxyethylen-alkylphenylether oder ein Salz davon.

**5.** Toner nach Anspruch 1 oder 2,
**dadurch gekennzeichnet, dass**
die oberflächenaktive, anionische, organische Phosphorsäureester-Verbindung eine der nachstehenden Verbindungen ist, nämlich

- ein Alkylester der Phosphorsäure oder ein Salz davon,
- ein Ester der Phosphorsäure mit einem Polyoxyethylen-alkylphenylether oder ein Salz davon, oder
- ein Ester der Phosphorsäure mit einem Polyoxyethylen-alkylether oder ein Salz davon.

## Revendications

**1.** Toner pour développer des images électrostatiques qui comprend une résine pour toners et un agent colorant **caractérisé en ce qu'**il contient en tant qu'agent de contrôle de charge au moins l'un de composé de nigrosine [I] pouvant être obtenu en faisant réagir soit du C.I. Solvent Black 7, soit du C.I. Solvent Black 5 et un ou plusieurs composés choisis parmi le groupe consistant en (a) composés organiques anioniques tensioactifs d'acide sulfonique, (b) composés organiques anioniques tensioactifs d'ester d'acide sulfurique et (c) en composés organiques anioniques tensioactifs d'ester d'acide phosphorique.

**2.** Toner selon la revendication 1 pour développer des images électrostatiques dans lequel le composé de nigrosine [I] est un composé formant un sel ou un sel d'adduit d'acide représenté par la formule générale :

$$[\text{nigrosine}]^{+}\ A^{-}$$

dans laquelle $[\text{nigrosine}]^{+}$ représente un ion colorant dans le C.I. Solvent Black 7 ou le C.I. Solvent Black 5 ; $A^{-}$ représente un anion d'acide organique provenant de l'un des composés organiques anioniques tensioactifs tels que définis dans la revendication 1.

**3.** Toner selon la revendication 1 ou 2 dans lequel le composé organique anionique tensioactif est un composé choisi parmi le groupe consistant en un acide alkylbenzènesulfonique ou un sel de celui-ci, un acide alkylnaphathalènesulfonique ou un sel de celui-ci, un acide alkylnaphthalènedisulfonique ou un sel de celui-ci, un acide dialkylnapathalènedisulfonique ou un sel de celui-ci, et un acide disulfonique d'éther de diphényle ou un sel de celui-ci.

**4.** Toner selon la revendication 1 ou 2 dans lequel le composé organique anionique d'ester d'acide sulfurique tensioactif est un composé choisi parmi le groupe consistant en un ester d'acide sulfurique à degré d'alcool plus élevé ou un sel de celui-ci, un ester d'acide sulfurique d'éther alkyle polyoxyéthylénique ou un sel de celui-ci, et un ester d'acide sulfurique d'éther de phényle alkyle polyoxyéthylénique ou un sel de celui-ci.

**5.** Toner selon la revendication 1 ou 2 dans lequel le composé organique anionique d'ester d'acide phosphorique tensioactif est un composé choisi parmi le groupe consistant en un ester d'acide alkylphosphorique ou un sel de celui-ci, un ester d'acide phosphorique d'éther de phényle alkyle polyoxyéthylénique ou un sel de celui-ci, et un ester d'acide phosphorique d'éther alkyle polyoxyéthylénique ou un sel de celui-ci.

*Fig. 1*

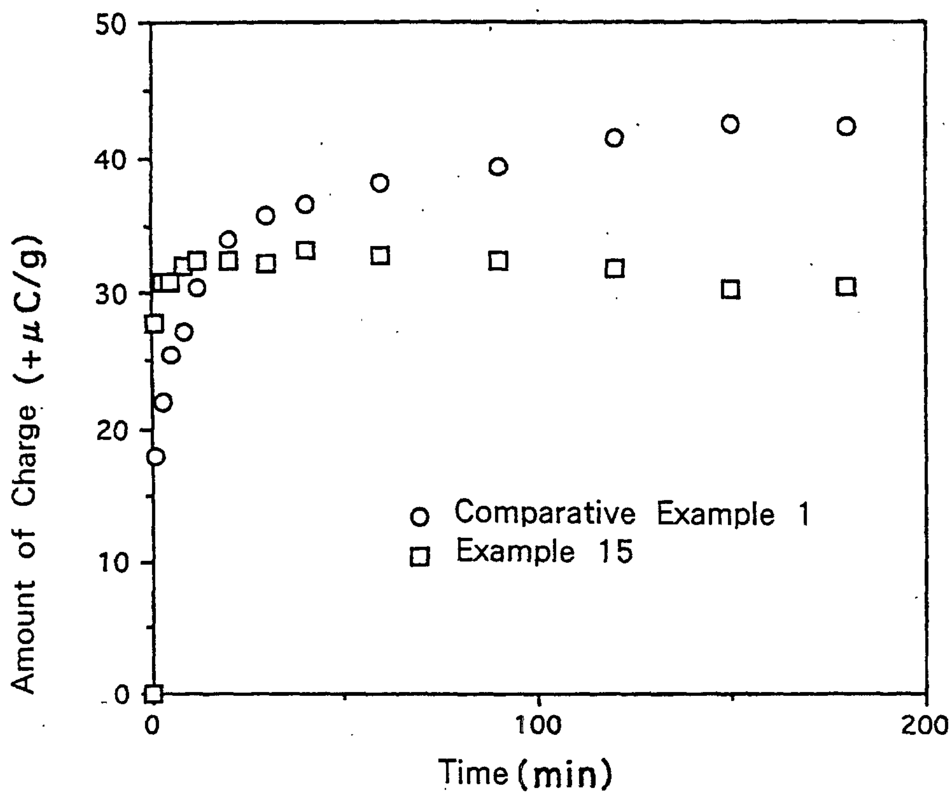
50
40
30
20
10
0
0
100
200
Amount of Charge (+μC/g)
Time (min)
Comparative Example 1
Example 15

*Fig. 2*

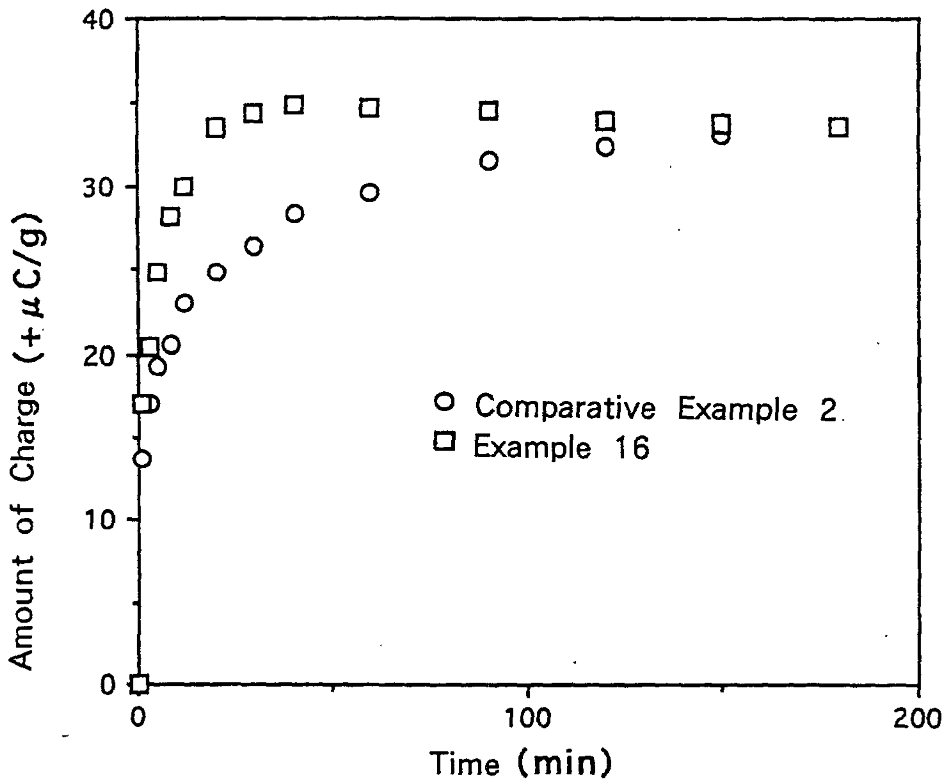
40
30
20
10
0
0
100
200
Amount of Charge (+μC/g)
Time (min)
Comparative Example 2
Example 16

*Fig. 3*

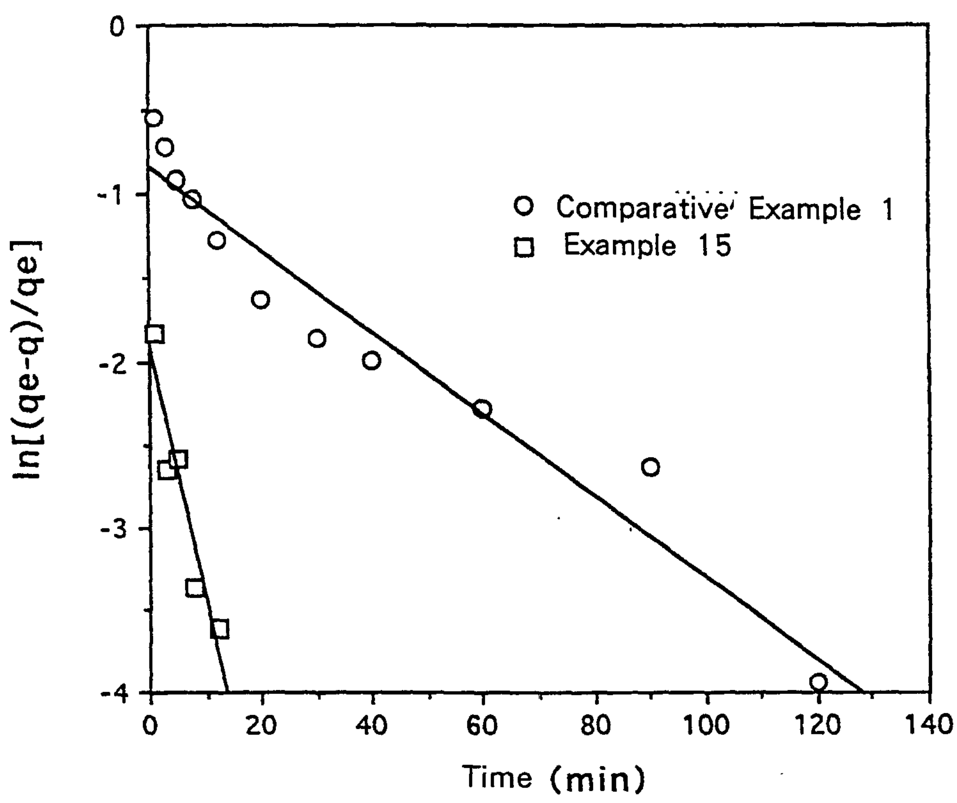
ln[(qe-q)/qe]
0
-1
-2
-3
-4
0
20
40
60
80
100
120
140
Time (min)
Comparative Example 1
Example 15

*Fig. 4*

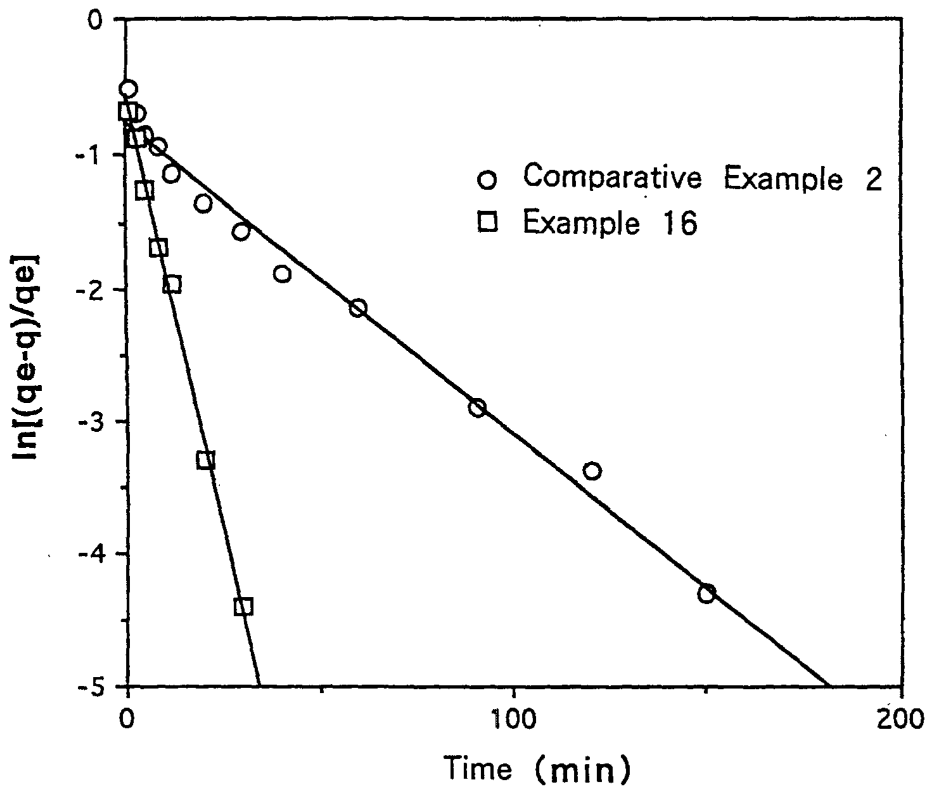
0
-1
-2
-3
-4
-5
ln[(qe-q)/qe]
0
100
200
Time (min)
Comparative Example 2
Example 16